# EUROPEAN PATENT SPECIFICATION

(11) **EP 1 900 066 B1**
(45) Date of publication and mention of the grant of the patent: **22.08.2012**
(21) Application number: 06835991.8
(22) Date of filing: 21.12.2006
(51) Int. Cl.: H01R 13/447

(54) **PORTABLE DATA STORAGE APPARATUS WITH CONNECTOR RETRACTION**
TRAGBARES DATENSPEICHERUNGSGERÄT MIT STECKEREINZUG
CLEF DE STOCKAGE DE DONNÉES AVEC CONNECTEUR RÉTRACTABLE

(43) Date of publication of application: 19.03.2008
(73) Proprietor: Trek 2000 International Ltd, Singapore 508769 (SG)
(72) Inventor: POO, Teng Pin, Singapore 540108 (SG); TAN, Henry, Singapore 467953 (SG)
(74) Representative: Howe, Steven
(86) International application number: PCT/SG2006/000402
(87) International publication number: WO 2008/004979

(56) References cited:
- EP-A1- 1 703 782
- EP-A1- 1 703 782
- DE-U1-202004 000 834
- DE-U1-202004 001 259
- US-B2- 6 926 544
- US-B2- 6 926 544

## Description

### Field

This invention relates to portable data storage apparatus with connector retraction and refers particularly, though not exclusively, to a USB flash drive with connector retraction where the connector cap operates the retraction mechanism.

### Background

USB flash drives are now quite popular for data storage and transfer, authentication, and so forth. The normal construction has a body with a connector extending from the body. A releasable cap covers the connector when the USB flash drive is not in use. The cap may be a separate component, or may be attached to the body. However, caps become lost, or may be accidentally removed from the cover or connector and the connector can be damaged. This renders the USB flash drive virtually useless.

DE202004001259 discloses a portable data storage device which is rotatable to be flush along an edge of a casing. DE20200400834 discloses a portable data storage device without a cap, but having a retractable connector.

### Summary

The present invention is directed to a portable data storage apparatus comprising:
a housing having a front wall, and an opening in the front wall;
a circuit board located within the housing;
a connector electrically connected to the circuit board and extending outwardly therefrom for movement therewith;
a cap pivotally connected to the housing for movement relative.to the housing between a first position and a second position;
an operating mechanism operatively connecting the cap and the circuit board for moving the circuit board with the movement of the cap, the circuit board and the connector being in a retracted position when the cap is in the first position when the cap is located at the central axis of the connector, and are in an extended position when the cap is in the second position;
characterised in the connector is arranged to move along the central axis of the connector, and in that the operating mechanism comprising at least one pin engaging in at least one track, the at least one pin passing through at least one opening in the housing.

In a further aspect of the invention, the circuit board may be mounted within a cover, the connector being physically connected to at least one of: the circuit board, and the cover. The cover may have a top surface, and the top surface may comprise the at least one track. The at least one track may comprise an annular track. The annular track may be undercut, and the at least one pin may have a bulbous head for engaging in and being retained by the annular track.

Additionally or alternatively, the cover may have a lower surface, and the lower surface may comprise the at least one track. Further alternatively, the circuit board may comprise the at least one track. The at least one track or the at least one opening may be at an angle of inclination to a central longitudinal axis of the housing. The angle of inclination may be in the range 30° to 60°, preferably 45°.

The cap may be generally U-shaped and may comprise an upper arm pivotally connected to a top wall of the housing, a lower arm pivotally connected to a bottom wall of the housing, an end integral with and extending between the upper arm and the lower arm, and an open end.

The at least one pin may extend downwardly from the upper arm, upwardly from the lower arm, and downwardly from the upper arm and upwardly from the lower arm. When the connector is in the extended position, the connector may pass through the opening in the front wall. When the connector is in the retracted position an outer end of the connector may be located: within the housing, or in the opening in the front wall.

The housing may further comprise a plurality of sliders on which the circuit board or the cover can slide between the retracted position and the extended position. The connector may be a USB connector or an IEEE1394 connector. The circuit board may comprise non-volatile memory.

The cap may have a cam or over-centre action when moving into and out of the first and second positions for providing tactile feel of engagement and disengagement respectively. The cap may require a small force to pass over front corner edges at junctions of side walls of the housing with the front wall of the housing, and rear corner edges at junctions of the side walls of the housing with a rear wall of the housing. The at least one pin may form a pivot connection between the cap and the housing.

### Brief Description of the Drawings

In order than the invention may be fully understood and readily put into practical effect there shall now be described by way of non-limitative example only exemplary embodiments, the description being with reference to the accompanying illustrative drawings.

In the drawings:
Figure 1 is a front perspective view of an exemplary embodiment in a first position;
Figure 2 is a front perspective view of the exemplary embodiment in an intermediate position;
Figure 3 is a front perspective view of the exemplary embodiment in another intermediate position;
Figure 4 is a front perspective view of the exemplary embodiment in a second position;
Figure 5 is a transparent top view of the exemplary embodiment;

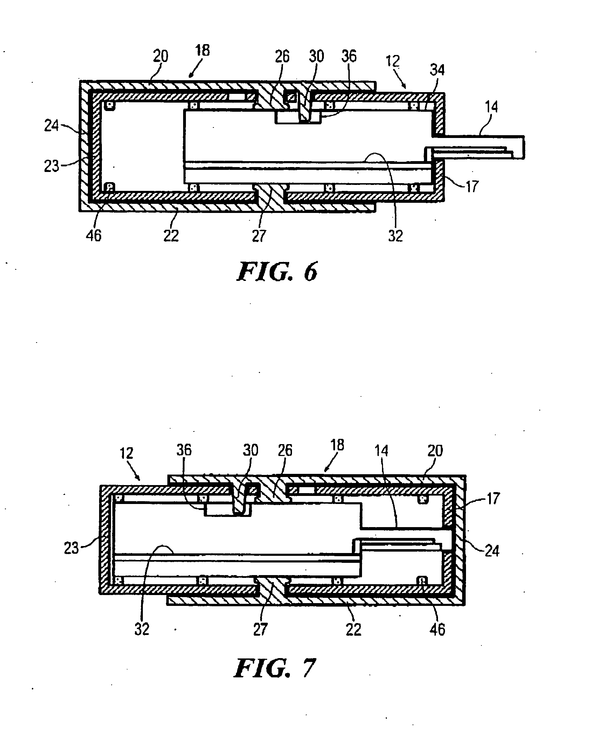

Figure 6 is a longitudinal cross section along the line and in the direction of arrows 6-6 on Figure 4;
Figure 7 is a view corresponding to Figure 6 but in the first position
Figure 8 is a view corresponding to Figure 6 of another exemplary embodiment; and
Figure 9 is a view corresponding to Figure 7 of the another exemplary embodiment.

### Detailed Description of the Exemplary Embodiments

In the drawings there is shown a portable data storage apparatus 10. The portable data storage apparatus 10 has non-volatile data storage such as, for example, flash memory, a disk drive, and so forth. The apparatus 10 has a housing 12 and a USB connector 14 that passes through an opening 16 in a front wall 17 of the housing 12. The connector 14 may be a USB connector or a connector according to the IEEE standard 1394 - a "Firewire" connector. All reference to a USB connector is to be taken as including a reference to a "Firewire" connector.

A generally U-shaped cap 18 is pivotally connected to the housing 12 by a pivot connection 26 to the top wall 19 and/or a pivot connection 27 to the lower wall 21 of the housing 12. The cap 18 has an upper arm 18, a lower arm 20, an end integral with and extending between the upper arm 20 and the lower arm 22, and an open end 42.

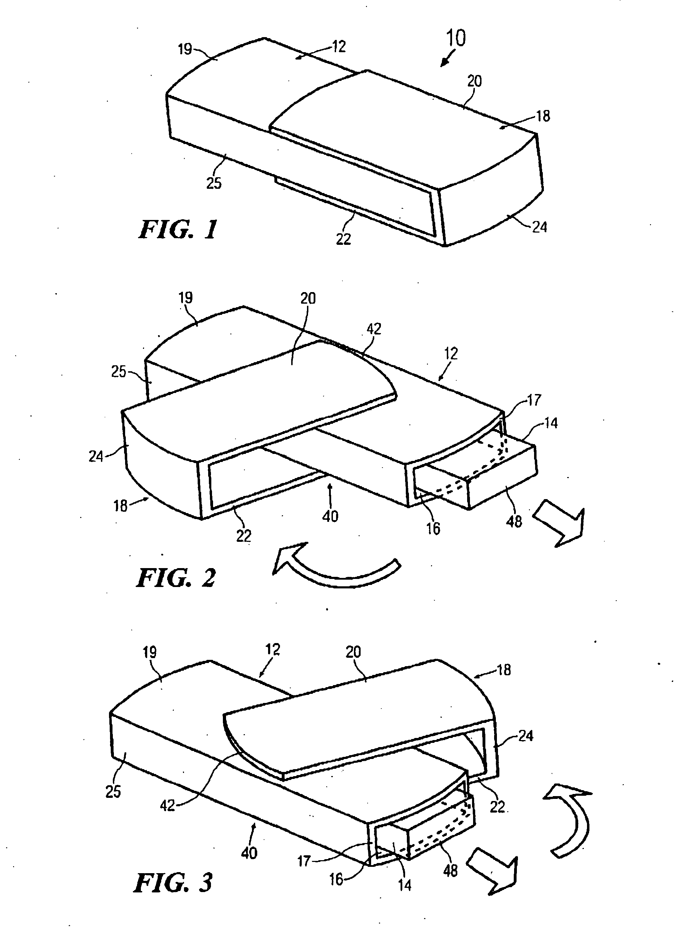

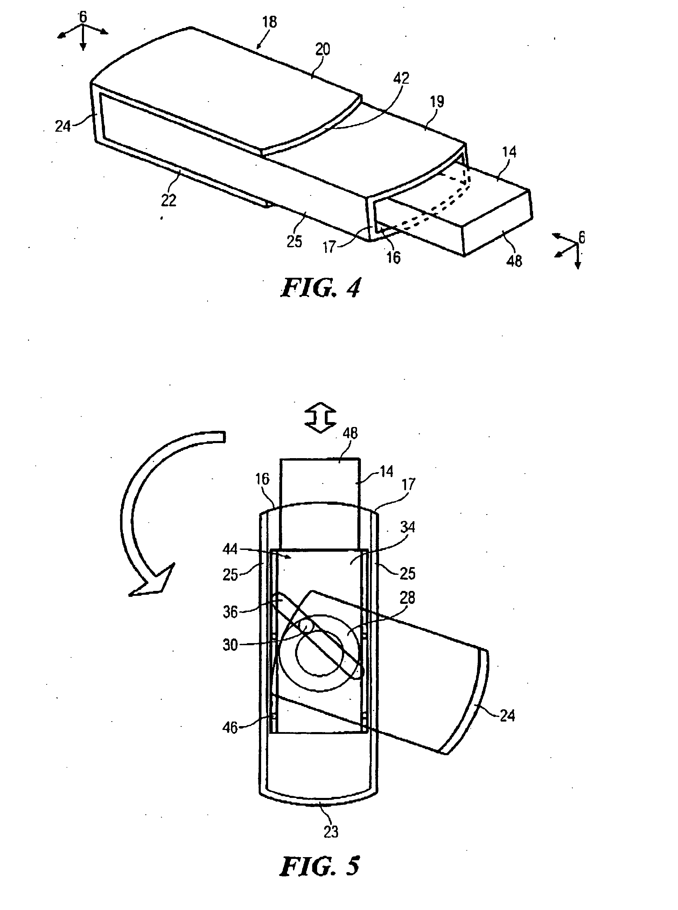

The cap 18 is able to move from a first position (shown in Figure 1) by a pivoting movement to a second position (shown in Figure 4). In the first position, the end 24 of the cap 18 covers end 17 and opening 16, as well as the connector 14. When in the first position the end 24 of the cap 18 covers and protects the connector 14. In the second position, the end 24 of the cap 18 does not cover the front wall 17, and the connector 14. As such the connector 14 is able to be used in the normal manner. When in this position, the end 24 of the cap 18 is located over the rear wall 23, the rear wall 23 being opposite the front wall 17.

The connector 14 is operatively and physically connected to a circuit board 32 that contains the operating electronics for the apparatus 10 (including non-volatile memory such as, for example, a disk drive and/or flash memory), and extends axially outwardly therefrom. The circuit board 32 may be contained within a cover 34, if required or desired. If there is a cover 34, the connection of the connector may be electrically to the circuit board 32 and physically to the cover 34 and/or the circuit board 32. An operating mechanism generally designated as 40 interconnects the cap 18 with the cover 34 or, if there is no cover 34, the circuit board 32.

In the exemplary embodiment the cap 18 has a pin 30 extending downwardly from a lower surface of the upper arm 20 of the cap 18 to the interior of the housing 12. The pin 30 is located between the pivot connection 26 of the cap 18 to the housing 12, and the open end 42 of the cap 18. If required or desired, there may be a second pin (not shown) extending upwardly from an upper surface of the lower arm 22 of the cap 18 to the interior of the housing 12. The second pin would be located between the pivot connection 27 of the cap 18 to the housing 12, and the open end 42 of the cap 18.

The pin 30 extends through at least one opening 28 in the top wall 19 of the housing 12 and engages in a track 36 formed in or on the top surface 44 of cover 34. If there is no cover, the track 36 would be in a member attached to the circuit board 32. The track 36 is inclined to the central, longitudinal axis of the top wall 17 of the housing 12 at an angle that is preferably in the range 30° to 60°, more preferably being 45°. If there is a second pin, it would pass through second openings in the housing 12, and engage in a second track. It would be, in effect, a mirror image of the pin 30 and track 36. The opening 28 will be arcuate and may cover an extended angle of movement to allow the cap to be moved between the first and second positions.

In this way, when the cap 18 is moved in a pivoting manner about the pivots 26, 27 the pin 30 will press against the side walls of the track 36 and force the cover 34, or the circuit board 32, to move in the direction of the central, longitudinal axis of the cover 34. The movement may be clockwise (Figure 2) or anticlockwise (Figure 3) to move from the first position shown in Figure 1 to the second position shown in Figure 4. The reverse movement could also be either clockwise or anticlockwise to move from the second position (Figure 4) to the first position (Figure 1). During the movement of the cap 18, the connector 14 will move in the axial direction with the circuit board 32 and/or cover 34. In this way, when the cap 18 is in the second position (Figure 4) the connector is fully extended and can be used in the normal manner. When the cap 18 is in the first position (Figure 1) the connector 14 is in a retracted position and is retracted within the housing 12 and its end 48 (as well as the opening 16) are covered by the end 24 of the cap 18. When the cap 18 is in the second position (Figure 4) the connector 14 is in an extended position and extends through the opening 16 and axially outwardly from the housing 12 and can be used in the normal manner. In this way the connector 14 is fully protected when the cap 18 is in the first position. When in the retracted or first position, the end 48 of the connector 14 may be located within opening 16 in the end wall 17 and may not be withdrawn into the interior of housing 12. This therefore provides correct alignment of connector 14 and opening 16 at all times.

Sliders 46 may be provided on which the cover 34 moves to facilitate ease and accuracy of movement.

The cap 18 may have a cam or over-centre action when moving into and out of the first and second positions to provide tactile "feel" of engagement and disengagement respectively. This may be by selection of dimension such that the cap 18 requires a small force to pass over the corner edges of the side walls 25 of the housing 12 at the junction with the front and rear walls 17, 23. Additionally or alternatively, this may be given by the cover 34 or the circuit board 32 contacting the front and rear walls 17, 23 at the ends of its movement.

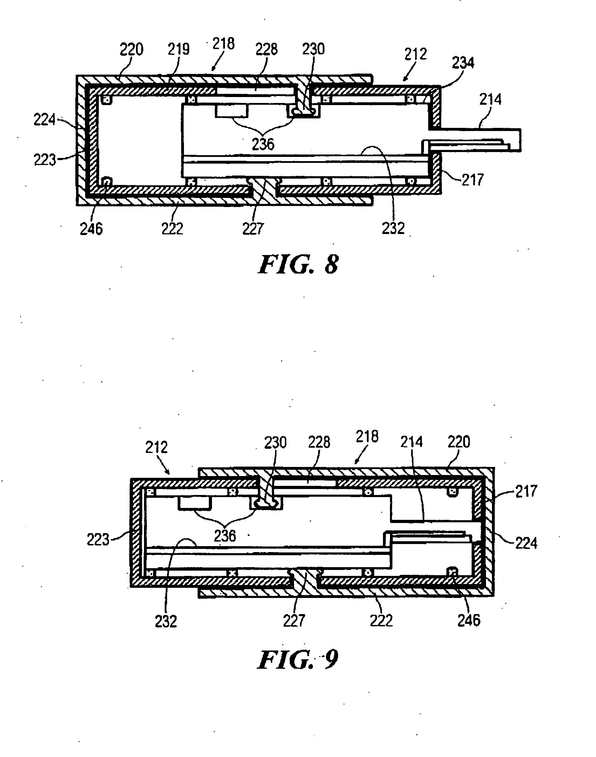

Figures 8 and 9 show another exemplary embodiment where the same reference numerals are used for like components but with the addition of a prefix number 2.

In this embodiment the track the cap 218 has a pin 230 extending downwardly from a lower surface of the upper arm 220 of the cap 218 to the interior of the cover 234. The pin 230 forms the upper pivot connection of the cap 218 to the housing 212.

In this exemplary embodiment the form of the opening 228 and the track 236 is the reverse of that of the earlier exemplary embodiment. As such the pin 230 extends through at least one opening 228 in the top wall 219 of the housing 212 and engages in a track 236 formed in or on the top surface 244 of cover 234. If there is no cover, the track 236 would be in a member attached to the circuit board 232. The opening 228 is inclined to the central, longitudinal axis of the top wall 219 of the housing 212 at an angle that is preferably in the range 30° to 60°, more preferably being 45°. The track 28 will be arcuate and may cover an extended angle of movement to allow the cap to be moved between the first and second positions. Preferably, and as shown, the track 236 is an annular track that extends for 360°.

In this way, when the cap 218 is moved in a pivoting manner about the pivots 227 and 230, the pin 230 will slide along the opening 228 and press against the side walls of the track 236 and force the cover 234, or the circuit board 232, to move in the direction of the central, longitudinal axis of the cover 234. The opening 228 may be of a width greater than the width of the pin 230 to accommodate variations in the movement of the pin 230 as it travels along the opening 228. The pin 230 may have a bulbous head and track 236 may be undercut so that pin 230 engages in and is retained in the track 236. In this way the pin 230 acts as the upper pivot connection between the cap 218 and the housing 212. Therefore, a separate pivot pin 26 would not be required. However, one may be provided of required or desired.

During the movement of the cap 218, the connector 214 will move in the direction of the longitudinal axis with the circuit board 232 and/or cover 234. In this way, when the cap 218 is in the second position (Figure 8) the connector is fully extended and can be used in the normal manner. When the cap 218 is in the first position (Figure 9) the connector 214 is in a retracted position and is retracted within the housing 212 and its end 248 (as well as the opening 216) are covered by the end 224 of the cap 218. When the cap 218 is in the second position (Figure 8) the connector 214 is in an extended position and extends through the opening 216 and axially outwardly from the housing 212 and can be used in the normal manner. In this way the connector 214 is fully protected when the cap 218 is in the first position. When in the retracted or first position, the end 248 of the connector 214 may be located within opening 216 in the end wall 217 and may not be withdrawn into the interior of housing 212. This therefore provides correct alignment of connector 214 and opening 216 at all times.

Whilst there has been described in the foregoing description preferred embodiments of the present invention, it will be understood by those skilled in the technology concerned that many variations in details of design, construction and/or operation may be made without departing from the scope of the present invention as defined by the appended claims.

## Claims

1. Portable data storage apparatus (10) comprising:
a housing (12) having a front wall (17), and an opening (16) in the front wall (17);
a circuit board (32) located within the housing (12);
a connector (14) electrically connected to the circuit board (32) and extending outwardly therefrom for movement therewith;
a cap (18) pivotally connected to the housing (12) for movement relative to the housing (12) between a first position and a second position;
an operating mechanism operatively connecting the cap (18) and the circuit board (32) for moving the circuit board (32) with the movement of the cap (18), the circuit board (32) and the connector (14) being in a retracted position when the cap (18) is in the first position when the cap (18) is located at the central axis of the connector (14), and are in an extended position when the cap (18) is in the second position;
**characterised in that** the connector (14) is arranged to move along the central axis of the connector (14), and **in that** the operating mechanism comprises at least one pin (30) engaging in at least one track (36), the at least one pin (30) passing through at least one opening in the housing (12).

2. Portable data storage apparatus (10) as claimed in claim 1, wherein the circuit board (32) is mounted within a cover (34), the connector (14) being physically connected to at least one of the circuit board (32), and the cover (34).

3. Portable data storage apparatus (10) as claimed in claim 2, wherein the cover (34) has a top surface (44), the top surface (44) comprising the at least one track (36).

4. Portable data storage apparatus (10) as claimed in claim 2, wherein the cover (34) has a lower surface, the lower surface comprising the at least one track (36).

5. Portable data storage apparatus (10) as claimed in claim 3, wherein the cover (34) has a lower surface, the lower surface also comprising at least one track (36).

6. Portable data storage apparatus (10) as claimed in any one of claims 1 to 5, wherein the circuit board (32) comprises the at least one track (36).

7. Portable data storage apparatus (10) as claimed in any one of claims 1 to 6, wherein the at least one track (36) is at an angle of inclination to a central longitudinal axis of the housing (12).

8. Portable data storage apparatus (10) as claimed in claim 7, wherein the angle of inclination is in the range 30° to 60°.

9. Portable data storage apparatus (10) as claimed in claim 7 or claim 8, wherein the angle of inclination is 45°.

10. Portable data storage apparatus (10) as claimed in any one of claims 1 to 6, wherein the at least one opening (16) is at an angle of inclination to a central longitudinal axis of the housing (12).

11. Portable data storage apparatus (10) as claimed in claim 10, wherein the angle of inclination is in the range 30° to 60°.

12. Portable data storage apparatus (10) as claimed in claim 10 or claim 11, wherein the angle of inclination is 45°.

13. Portable data storage apparatus (10) as claimed in any one of claims 1 to 12, wherein the cap (18) is generally U-shaped and comprises an upper arm (220) pivotally connected to a top wall (219) of the housing (212), a lower arm (222) pivotally connected to a bottom wall (246) of the housing (212), an end integral with and extending between the upper arm (220) and the lower arm (222), and an open end (228).

14. Portable data storage apparatus (10) as claimed in claim 13 when appended to claim 1, wherein the at least one pin (230) extends in a manner selected from the group consisting of a first pin (230) extending downwardly from the upper arm (220), a second pin (26) extending upwardly from the lower arm (222), and the first pin (230) extending downwardly from the upper arm (220) and the second pin (26) extending upwardly from the lower arm (222).

15. Portable data storage apparatus (10) as claimed in any one of claims 1 to 14, wherein when the connector (214) is in the extended position, the connector (214) passes through the opening (216) in the front wall (217).

16. Portable data storage apparatus (10) as claimed in any one of claims 1 to 12, wherein when the connector (214) is in the retracted position an outer end (248) of the connector (214) is located at one selected from the group consisting of within the housing (212), in the opening (216) in the front wall (217).

17. Portable data storage apparatus (10) as claimed in any one of claims 1 to 16, wherein the housing (212) further comprises a plurality of sliders on which the circuit board (232) can slide between the retracted position and the extended position.

18. Portable data storage apparatus (10) as claimed in any one of claims 2 to 16, wherein the housing (212) further comprises a plurality of sliders on which the cover (234) can slide between the retracted position and the extended position.

19. Portable data storage apparatus (10) as claimed in any one of claims 1 to 18, wherein, the circuit board (232) comprises non-volatile memory.

20. Portable data storage apparatus (10) as claimed in any one of claims 1 to 19, wherein the cap (218) has a cam or over-centre action when moving into and out of the first and second positions for providing tactile feel of engagement and disengagement respectively.

21. Portable data storage apparatus (10) as claimed in claim 20, wherein, in use, the cap (218) requires a small force to pass over front corner edges at junctions of side walls (25) of the housing (12) with the front wall (17) of the housing (12), and rear corner edges at junctions of the side walls (25) of the housing (12) with a rear wall (23) of the housing (12).

22. Portable data storage apparatus (10) as claimed in any one of claims 3 to 21, wherein the at least one track (36) comprises an annular track (230).

23. Portable data storage apparatus (10) as claimed in claim 22, wherein the annular track is undercut, the at least one pin (230) having a bulbous head for engaging in and being retained by the annular track (230).

24. Portable data storage apparatus (10) as claimed in any one of claims 1 to 23, wherein the at least one pin (230) forms a pivot connection between the cap (218) and the housing (212).

## Patentansprüche

1. Tragbare Datenspeichervorrichtung (10), umfassend:
ein Gehäuse (12) mit einer vorderen Wand (17) und einer öffnung (16) in der vorderen Wand (17),
eine in dem Gehäuse (12) befindliche Leiterplatte (32),
einen Verbinder (14), der elektrisch mit der Leiterplatte (32) verbunden ist und sich zur Bewegung mit ihr von ihr nach außen erstreckt,
eine Kappe (18), die zur Bewegung relativ zu dem Gehäuse (12) zwischen einer ersten Stellung und einer zweiten Stellung drehbar an dem Gehäuse (12) angelenkt ist,
einen Betätigungsmechanismus, der die Kappe (18) und die Leiterplatte (32) funktionell verbindet zum Bewegen der Leiterplatte (32) mit der Bewegung der Kappe (18), wobei die Leiterplatte (32) und der Verbinder (14) in einer eingefahrenen Stellung sind, wenn die Kappe (18) in der ersten Stellung ist, wenn die Kappe (18) sich an der Mittelachse des Verbinders (14) befindet, und in einer ausgefahrenen Stellung sind, wenn die Kappe (18) in der zweiten Stellung ist,
**dadurch gekennzeichnet, dass** der Verbinder (14) zur Bewegung an der Mittelachse des Verbinders (14) entlang angeordnet ist und dass der Betätigungsmechanismus wenigstens einen Stift (30) aufweist, der in wenigstens einer Bahn (36) in Eingriff ist, wobei der wenigstens eine Stift (30) durch wenigstens eine Öffnung in dem Gehäuse (12) hindurch verläuft.

2. Tragbare Datenspeichervorrichtung (10) nach Anspruch 1, wobei die Leiterplatte (32) in einer Abdeckung (34) montiert ist, wobei der Verbinder (14) physisch mit der Leiterplatte (32) und/oder der Abdeckung (34) verbunden ist.

3. Tragbare Datenspeichervorrichtung (10) nach Anspruch 2, wobei die Abdeckung (34) eine obere Oberfläche (44) hat, wobei die obere Oberfläche (44) die wenigstens eine Bahn (36) aufweist.

4. Tragbare Datenspeichervorrichtung (10) nach Anspruch 2, wobei die Abdeckung (34) eine untere Oberfläche hat, wobei die untere Oberfläche die wenigstens eine Bahn (36) aufweist.

5. Tragbare Datenspeichervorrichtung (10) nach Anspruch 3, wobei die Abdeckung (34) eine untere Oberfläche hat, wobei die untere Oberfläche auch wenigstens eine Bahn (36) aufweist.

6. Tragbare Datenspeichervorrichtung (10) nach einem der Ansprüche 1 bis 5, wobei die Leiterplatte (32) die wenigstens eine Bahn (36) aufweist.

7. Tragbare Datenspeichervorrichtung (10) nach einem der Ansprüche 1 bis 6, wobei die wenigstens eine Bahn (36) in einem Neigungswinkel zu einer zentralen Längsachse des Gehäuses (12) verläuft.

8. Tragbare Datenspeichervorrichtung (10) nach Anspruch 7, wobei der Neigungswinkel im Bereich von 30° bis 60° beträgt.

9. Tragbare Datenspeichervorrichtung (10) nach Anspruch 7 oder Anspruch 8, wobei der Neigungswinkel 45° beträgt.

10. Tragbare Datenspeichervorrichtung (10) nach einem der Ansprüche 1 bis 6, wobei die wenigstens eine Öffnung (16) in einem Neigungswinkel zu einer zentralen Längsachse des Gehäuses (12) verläuft.

11. Tragbare Datenspeichervorrichtung (10) nach Anspruch 10, wobei der Neigungswinkel im Bereich von 30° bis 60° beträgt.

12. Tragbare Datenspeichervorrichtung (10) nach Anspruch 10 oder Anspruch 11, wobei der Neigungswinkel 45° beträgt.

13. Tragbare Datenspeichervorrichtung (10) nach einem der Ansprüche 1 bis 12, wobei die Kappe (18) allgemein U-förmig ist und einen oberen Arm (220), der an einer oberen Wand (219) des Gehäuses (212) drehbar angelenkt ist, einen unteren Arm (222), der an einer unteren Wand (246) des Gehäuses (212) drehbar angelenkt ist, ein Ende, das mit dem oberen Arm (220) und dem unteren Arm (222) einstückig ist und ihnen verläuft, und ein offenes Ende (228) aufweist.

14. Tragbare Datenspeichervorrichtung (10) nach Anspruch 13, wenn abhängig von Anspruch 1, wobei der wenigstens eine Stift (230) sich auf eine Weise erstreckt, die aus der Gruppe bestehend aus Folgenden ausgewählt ist: einem ersten Stift (230), der sich von dem oberen Arm (220) abwärts erstreckt, einem zweiten Stift (26), der sich von dem unteren Arm (222) aufwärts erstreckt, sowie dem ersten Stift (230), der sich von dem oberen Arm (220) abwärts erstreckt, und dem zweiten Stift (26), der sich von dem unteren Arm (222) aufwärts erstreckt.

15. Tragbare Datenspeichervorrichtung (10) nach einem der Ansprüche 1 bis 14, wobei, wenn der Verbinder (214) in der ausgefahrenen Position ist, der Verbinder (214) durch die Öffnung (216) in der vorderen Wand (217) verläuft.

16. Tragbare Datenspeichervorrichtung (10) nach einem der Ansprüche 1 bis 12, wobei, wenn der Verbinder (214) in der eingefahrenen Stellung ist, ein äußeres Ende (248) des Verbinders (214) sich an einem Punkt befindet, der aus der Gruppe bestehend aus Folgenden ausgewählt ist: innerhalb des Gehäuses (212), in der öffnung (216) in der vorderen Wand (217).

17. Tragbare Datenspeichervorrichtung (10) nach einem der Ansprüche 1 bis 16, wobei das Gehäuse (212) ferner eine Vielzahl von Gleitstücken aufweist, auf denen die Leiterplatte (232) zwischen der eingefahrenen Stellung und der ausgefahrenen Stellung gleiten kann.

18. Tragbare Datenspeichervorrichtung (10) nach einem der Ansprüche 2 bis 16, wobei das Gehäuse (212) ferner eine Vielzahl von Gleitstücken aufweist, auf denen die Abdeckung (234) zwischen der eingefahrenen Stellung und der ausgefahrenen Stellung gleiten kann.

19. Tragbare Datenspeichervorrichtung (10) nach einem der Ansprüche 1 bis 18, wobei die Leiterplatte (232) einen nichtflüchtigen Speicher aufweist.

20. Tragbare Datenspeichervorrichtung (10) nach einem der Ansprüche 1 bis 19, wobei die Kappe (218) eine Nocken- oder Kniehebelfunktion hat, wenn sie sich in die erste und zweite Stellung und aus ihnen heraus bewegt, um das Einrasten bzw. Ausrasten haptisch wahrnehmbar zu machen.

21. Tragbare Datenspeichervorrichtung (10) nach Anspruch 20, wobei die Kappe (218) im Gebrauch eine kleine Kraft erfordert, um über vordere Eckenkanten an Verbindungsstellen von Seitenwänden (25) des Gehäuses (12) mit der vorderen Wand (17) des Gehäuses (12) hinweg geführt zu werden und über hintere Eckränder an Verbindungsstellen der Seitenwände (25) des Gehäuses (12) mit einer hinteren Wand (23) des Gehäuses (12) hinweg geführt zu werden.

22. Tragbare Datenspeichervorrichtung (10) nach einem der Ansprüche 3 bis 21, wobei die wenigstens eine Bahn (36) eine ringförmige Bahn (230) aufweist.

23. Tragbare Datenspeichervorrichtung (10) nach Anspruch 22, wobei die ringförmige Bahn hinterschnitten ist, wobei der wenigstens eine Stift (230) einen kugeligen Kopf für den Eingriff in die und das Festgehaltenwerden in der ringförmige(n) Bahn (230) hat.

24. Tragbare Datenspeichervorrichtung (10) nach einem der Ansprüche 1 bis 23, wobei der wenigstens eine Stift (230) eine Drehverbindung zwischen der Kappe (218) und dem Gehäuse (212) bildet.

## Revendications

1. Appareil portatif de stockage de données (10) comprenant :
un logement (12) ayant une paroi frontale (17), et une ouverture (16) dans la paroi frontale (17);
une carte à circuit imprimé (32) placée à l'intérieur du logement (12) ;
un connecteur (14) connecté électriquement à la carte à circuit imprimé (32) et s'étendant vers l'extérieur depuis celle-ci en vue de se déplacer avec elle ;
un capuchon (18) raccordé avec faculté de pivotement au logement (12) en vue de se déplacer par rapport au logement (12) entre une première position et une seconde position ;
un mécanisme d'actionnement connectant opérationnellement le capuchon (18) et la carte à circuit imprimé (32) pour déplacer la carte à circuit imprimé (32) avec le mouvement du capuchon (18), la carte à circuit imprimé (32) et le connecteur (14) étant en une position rétractée quand le capuchon (18) se trouve à la première position à laquelle le capuchon (18) est situé au niveau de l'axe central du connecteur (14), et étant en une position déployée quand le capuchon (18) se trouve à la seconde position ;
**caractérisé en ce que** le connecteur (14) est agencé pour se déplacer le long de l'axe central du connecteur (14), et **en ce que** le mécanisme d'actionnement comprend au moins une broche (30) qui s'engage dans au moins une rainure (36), l'au moins une broche (30) traversant au moins une ouverture dans le logement (12).

2. Appareil portatif de stockage de données (10) selon la revendication 1, dans lequel la carte à circuit imprimé (32) est montée dans un couvercle (34), le connecteur (14) étant raccordé physiquement à au moins l'un de la carte à circuit imprimé (32) et du couvercle (34).

3. Appareil portatif de stockage de données (10) selon la revendication 2, dans lequel le couvercle (34) a une surface supérieure (44), la surface supérieure (44) comprenant l'au moins une rainure (36).

4. Appareil portatif de stockage de données (10) selon la revendication 2, dans lequel le couvercle (34) a une surface inférieure, la surface inférieure comprenant l'au moins une rainure (36).

5. Appareil portatif de stockage de données (10) selon la revendication 3, dans lequel le couvercle (34) a une surface inférieure, la surface inférieure comprenant aussi au moins une rainure (36).

6. Appareil portatif de stockage de données (10) selon l'une quelconque des revendications 1 à 5, dans lequel la carte à circuit imprimé (32) comprend l'au moins une rainure (36).

7. Appareil portatif de stockage de données (10) selon l'une quelconque des revendications précédentes, 1 à 6, dans lequel l'au moins une rainure (36) se trouve à un angle d'inclinaison par rapport à un axe longitudinal central du logement (12).

8. Appareil portatif de stockage de données (10) selon la revendication 7, dans lequel l'angle d'inclinaison est compris dans la plage de 30° à 60°.

9. Appareil portatif de stockage de données (10) selon la revendication 7 ou la revendication 8, dans lequel l'angle d'inclinaison est de 45°.

10. Appareil portatif de stockage de données (10) selon l'une quelconque des revendications 1 à 6, dans lequel l'au moins une ouverture (16) se trouve à un angle d'inclinaison par rapport à un axe longitudinal central du logement (12).

11. Appareil portatif de stockage de données (10) selon la revendication 10. dans lequel l'angle d'inclinaison est compris dans la plage de 30° à 60°.

12. Appareil portatif de stockage de données (10) selon la revendication 10 ou la revendication 11, dans lequel l'angle d'inclinaison est de 45°.

13. Appareil portatif de stockage de données (10) selon l'une quelconque des revendications 1 à 12, dans lequel le capuchon (18) a la forme générale d'un U et comprend un bras supérieur (220) raccordé avec faculté de pivotement à une paroi supérieure (219) du logement (212), un bras inférieur (222) raccordé avec faculté de pivotement à une paroi inférieure (246) du logement (212), une extrémité intégrée au bras supérieur (220) et au bras inférieur (222) et s'étendant entre ceux-ci, et une extrémité ouverte (228).

14. Appareil portatif de stockage de données (10) selon la revendication 13, dépendante de la revendication1, dans lequel l'au moins une broche (230) s'étend d'une manière sélectionnée dans le groupe consistant en une première broche (230) s'étendant vers le bas depuis le bras supérieur (220), une seconde broche (26) s'étendant vers le haut depuis le bas inférieur (222), et la première broche (230) s'étendant vers le bas depuis le bras supérieur (220) et la seconde broche (26) s'étendant vers le haut depuis le bras inférieur (222).

15. Appareil portatif de stockage de données (10) selon l'une quelconque des revendications 1 à 14, dans lequel quand le connecteur (214) est en position déployée, le connecteur (214) passe par l'ouverture (216) dans la paroi frontale (217).

16. Appareil portatif de stockage de données (10) selon l'une quelconque des revendications 1 à 12, dans lequel quand le connecteur (214) est en position rétractée, une extrémité externe (248) du connecteur (214) est située au niveau de l'un du groupe consistant en à l'intérieur du logement (212), dans l'ouverture (216) dans la paroi frontale (217).

17. Appareil portatif de stockage de données (10) selon l'une quelconque des revendications 1 à 16, dans lequel le logement (212) comprend en outre une pluralité de coulisses sur lesquelles la carte à circuit imprimé (232) peut coulisser entre la position rétractée et la position déployée.

18. Appareil portatif de stockage de données (10) selon l'une quelconque des revendications 2 à 16, dans lequel le logement (212) comprend en outre une pluralité de coulisses sur lesquelles le couvercle (234) peut coulisser entre la position rétractée et la position déployée.

19. Appareil portatif de stockage de données (10) selon l'une quelconque des revendications 1 à 18, dans lequel la carte à circuit imprimé (232) comprend une mémoire rémanente.

20. Appareil portatif de stockage de données (10) selon l'une quelconque des revendications 1 à 19, dans lequel le capuchon (218) a une action de came ou d'excentrage quand il prend et quitte les première et seconde positions afin de conférer une sensation tactile d'engagement et de désengagement respectivement.

21. Appareil portatif de stockage de données (10) selon la revendication 20, dans lequel, durant l'utilisation, le capuchon (218) nécessite une petite force pour passer par dessus des bords de coins frontaux au niveau de jonctions de parois latérales (25) du logement (12) avec la paroi frontale (17) du logement (12), et des bords de coins arrière au niveau de jonctions des parois latérales (25) du logement (12) avec une paroi arrière (23) du logement (12).

22. Appareil portatif de stockage de données (10) selon l'une quelconque des revendications 3 à 21, dans lequel l'au moins une rainure (36) consiste en une rainure annulaire (230).

23. Appareil portatif de stockage de données (10) selon la revendication 22, dans lequel la rainure annulaire est gravée en sous-jacence, l'au moins une broche (230) ayant une tête bulbeuse destinée à s'engager dans la rainure annulaire (320) et à être retenue par celle-ci.

24. Appareil portatif de stockage de données (10) selon l'une quelconque des revendications 1 à 23, dans lequel l'au moins une broche (230) forme une connexion pivot entre le capuchon (218) et le logement (212).
